Europäisches Patentamt

European Patent Office

Office européen des brevets

(19)

(11) Veröffentlichungsnummer: **0 176 002**
**B1**

(12) # EUROPÄISCHE PATENTSCHRIFT

(45) Veröffentlichungstag der Patentschrift:
**08.02.89**

(51) Int. Cl.⁴: **A 47 B 96/14,** A 47 B 57/06

(21) Anmeldenummer: **85111473.6**

(22) Anmeldetag: **11.09.85**

(54) **Regal.**

(30) Priorität: **26.09.84 DE 3435246**
**24.12.84 DE 3447300**

(43) Veröffentlichungstag der Anmeldung:
**02.04.86 Patentblatt 86/14**

(45) Bekanntmachung des Hinweises auf die Patenterteilung:
**08.02.89 Patentblatt 89/6**

(84) Benannte Vertragsstaaten:
**AT BE CH DE FR GB IT LI NL SE**

(56) Entgegenhaltungen:
**BE-A- 786 386**
**DE-A- 1 554 343**
**FR-A- 2 464 676**
**US-A- 3 151 745**

(73) Patentinhaber: **Fritz Schäfer Gesellschaft mit beschränkter Haftung, Fritz-Schäfer-Strasse 20, D-5908 Neunkirchen (DE)**

(72) Erfinder: **Schäfer, Gerhard, Oberes Gerstenfeld 2, D-5908 Neunkirchen-Salchendorf (DE)**

(74) Vertreter: **Müller, Gerd et al, Patentanwälte HEMMERICH-MÜLLER-GROSSE-POLLMEIER-MEY Hammerstrasse 2, D-5900 Siegen 1 (DE)**

ACTORUM AG

## Beschreibung

Die Erfindung betrifft ein Regal mit aufrechten Pfosten aus Blechprofilen sowie aus diese miteinander verbindenden Horizontalstreben, die ebenfalls aus Blechprofilen gebildet sind. Die Blechprofile der Pfosten haben dabei an einer Längsseite eine Spaltöffnung und sind zu einer diese Spaltöffnung kreuzenden Ebene im Qerschnitt symmetrisch gestaltet. Ferner wird deren Spaltöffnung beidseitig durch einen rechtwinklig von den ihr benachbarten Wänden nach aussen abstehenden Flansch begrenzt, und in die der Spaltöffnung gegenüberliegende Wand ist symmetrisch zu der die Spaltöffnung kreuzenden Ebene eine in das Blechprofil hineinragende Längssicke oder -leiste eingeformt, während die Blechprofile der Horizontalstreben wenigstens einen U- oder C-Querschnitt haben und, mit ihrer Längsöffnung nach oben oder unten gerichtet, über ihre Enden in die Spaltöffnung der Pfosten eingreifen sowie mit den dieser Spaltöffnung benachbarten Flanschen verbunden bzw. verbindbar sind.

Regale dieser Gattung sind bereits bekannt, wie bspw. der EP-A 0 077 885 und der DE-A 3 323 503 entnommen werden kann.

Bei dem Regal nach EP-A 0 077 885 sind dabei die Horizontalstreben mit ihren Enden so in den Bereich zwischen die die Spaltöffnung begrenzenden Flansche zweier Pfosten geführt, dass sie etwa mit der Rückseite der die Flansche tragenden Wandungen bündig abschliessen und zumindest durch entlang der freien Längskanten der Flansche gebildete Schweissnähte fest mit den Pfosten verbunden werden.

Zur Erzielung einer höheren Stabilität der Verbindung zwischen den Pfosten und den Horizontalstreben werden gemäss EP-A 0 077 885 jeweils auch noch Diagonalstreben zwischen den beiden Pfosten vorgesehen und in der Nähe ihrer Enden längs der Flanschkanten mit den Pfosten verschweisst.

Beim Regal nach DE-A 3 323 503 sind lösbare Verbindungen zwischen den Pfosten und den Horizontalstreben vorgesehen, die nach Art von selbstverspannenden Keilkupplungen arbeiten und über lappen- oder zungenartige Elemente zusammenwirken, die einerseits an den Pfosten und andererseits an den Horizontalstreben ausgeklinkt sind.

Bei beiden vorbekannten Bauarten der gattungsgemässen Regale ist es nachteilig, dass die auf die Horizontalstreben zur Einwirkung kommenden Kräfte praktisch ausschliesslich von den die Spaltöffnung beidseitig begrenzenden Flanschen der Pfosten aufgenommen werden müssen, während die übrigen Querschnittsbereiche dieser Pfosten keiner unmittelbaren Krafteinleitung unterliegen. Es hat sich aber in der Praxis gezeigt, dass die Formstabilität der jeweils aus zwei Pfosten und mindestens zwei Horizontalstreben gebildeten Rahmensysteme solcher Regale beeinträchtigt ist, und zwar sowohl in Richtung parallel als auch quer zu deren Ebene.

Zur Beseitigung dieser Unzulänglichkeiten liegt die Erfindung die Aufgabe zugrunde, ein Regal der eingangs im einzelnen erläuterten Gattung zu schaffen, bei dem auf einfache Art und Weise eine optimale Kraftübertragungsverbindung zwischen den aufrechten Pfosten und den Horizontalstreben sichergestellt und damit die Formstabilität der jeweils aus zwei Pfosten und mindestens zwei Horizontalstreben gebildeten Rahmensysteme verbessert wird.

Erreicht wird das gesteckte Ziel nach der Erfindung durch die im Kennzeichnungsteil des Anspruchs 1 aufgezeigten Massnahmen, nämlich dadurch, dass die Horizontalstreben mit ihren Enden bis an die der Spaltöffnung gegenüberliegende Wand in den die Pfosten bildenden Blechprofilen heranreichen und dort mit einer Ausklinkung versehen sind, in deren Bereich sie die Längssicke oder -leiste in den Pfosten gabelartig umfassen.

Vorteilhaft bei dieser Ausbildung ist, dass die Enden der Horizontalstreben die gesamte Profiltiefe der die Pfosten bildenden Blechprofile durchsetzen und in diesen jeweils an sich mit beträchtlichem Abstand gegenüberliegenden Wandabschnitten seitlich Abstützung finden.

Nach dem weiterbildenden Merkmal des Anspruchs 2 ist vorgesehen, dass die Horizontalstreben an jedem Flansch der Pfosten durch je eine Niet- oder Schraubverbindung befestigt bzw. befestigbar sind und eine dritte Verbindungsstelle zwischen jedem Ende der Horizontalstreben und den Pfosten durch ein Niet oder eine Schraube gebildet werden kann, das bzw. die einerseits an einem abgewinkelten Lappen im Bereich der Ausklinkungen der Horizontalstreben und andererseits in einer Wand der Längssicke oder -leiste der Pfosten angreift. Eine solche Dreipunktverbindung unterstützt die gewissermassen als Nut-Federverbindung wirkende Eingriffskupplung zwischen den Pfosten und den Horizontalstreben in beträchtlichem Masse. Da sich die Niet- und/oder Schraubverbindungen zwischen den Pfosten und den Horizontalstreben auf einfache Art und Weise leicht und sicher herstellen lassen, können Pfosten und Horizontalstreben zusammen mit allen übrigen zum Aufbau von Regalen erforderlichen Elementen raumsparend verpackt, gelagert und geliefert werden und lassen sich dann am Aufstellungsort leicht und sicher zusammensetzen. Gemäss Anspruch 3 ist aber die besonders vorteilhafte Möglichkeit gegeben, dass die beiden Niet- oder Schraubverbindungen zwischen den Horizontalstreben und den Flanschen der Pfosten in Achsflucht zueinander liegen und miteinander ein Verbindungsgelenk bilden, während die dritte Niet- oder Schraubverbindung zwischen den Lappen der Horizontalstreben und der Längssicke oder -leiste der Pfosten als Sperrverbindung für die Verbindungsgelenke wirksam gemacht werden kann. Zwei Pfosten und mindestens zwei Horizontalstreben können in diesem Falle nämlich bereits im Herstellerwerk so miteinander verbunden werden, dass sie sich relativ zueinander nach Art eines Lenkerparallelogramms verlagern lassen. Im zusammengelegten Zustand dieses Lenkerparallelogramms wird dann für die Verpackung, Lagerung und den Versand nur geringer Stauraum benötigt. Am Aufstellungsort der Regale braucht dann lediglich das Lenkerparallelogramm in die rechtwinklige Rahmenform gebracht und die Relativlage der Pfosten und Horizontalstreben zueinander durch Anbringen der dritten Niet- oder Schraubverbindung gesichert zu werden.

Zur weiteren Stabilisierung eines Regals der zuletzt erläuterten Bauart erweist es sich als zweckmässig, dass gemäss Anspruch 4 mit einer oberen und einer unteren zur Verbindung zweier Pfosten vorgesehenen Horizontalstrebe ein diagonal verlaufender Druckstab als Versteifungsstrebe verbindbar ist.

Gemäss Anspruch 5 ist es dabei besonders empfehlenswert, dass der Druckstab gabelförmige Enden hat, mit denen er die Horizontalstreben umgreift und mit diesen durch eine lösbare Schrauben-Steckverbindung kuppelbar ist. Die als Druckstab wirkende Versteifungsstrebe kann dabei aus den gleichen Blechprofilen wie die Horizontalstreben bestehen. Es wäre dann nämlich lediglich nötig, die deren gabelförmige Enden bildenden seitlichen Wandabschnitte um ihre Materialdicke nach auswärts zu verkröpfen, damit sie die Seitenwände der Horizontalstreben umgreifen können.

Als empfehlenswert kann es sich auch erweisen, die Endausklinkungen an den als Druckstab wirkenden Versteifungsstreben so vorzusehen, dass sich die Kanten ihrer Querwände gegen die benachbarten Wände der Horizontalstreben abstützen, wenn die Versteifungsstrebe ihre diagonale Wirklage zwischen der oberen und der unteren Horizontalstrebe einnimmt.

Anstelle der oder zusätzlich zu den als Druckstab wirkenden Versteifungsstreben ist nach Anspruch 6 erfindungsgemäss auch noch die Möglichkeit vorgesehen, zwischen zwei sich gegenüberliegenden Pfosten in von den Flanschen des Längsspaltes begrenzten Abstufungen Seitenwände als Aussteifungen zu befestigen.

Die Erfindung zielt ferner darauf ab, dass die im praktischen Gebrauch auftretenden Beanspruchungen in optimaler Weise von den zwischen den Pfosten vorgesehenen Verbindungselementen aufgenommen und in die Pfosten eingeleitet werden können und dabei eine hohe Formstabilität und Standfestigkeit des Regals sicherstellen.

Dieses Ziel wird durch die im Anspruch 7 angegebenen Merkmale, nämlich dadurch erreicht, dass die Längssicke oder -leiste in den Pfosten mit Einhänge- und/oder Verrastelementen für Eingriffselemente versehen ist, die sich an den freien Schenkeln von im Querschnitt etwa U- oder L-förmigen Kupplungsschuhen von Horizontaltraversen befinden, wobei die Kupplungsschuhe dem zwischen einer Längsseitenwand und der dieser benachbarten Seitenwand der Längssicke oder -leiste begrenzten Querschnittsbereich eines Pfostens passend umgreifen.

Zweckmässig ist in diesem Zusammenhang aber auch die Nutzung der im Anspruch 8 angegebenen Massnahmen, wonach die Längsseitenwände der Pfosten in ihrem der Längssicke oder -leiste benachbarten Bereich eine gegenüber dem die Einhänge- und/oder Verrastelemente aufweisenden Bereich abgestufte Querschnittseinziehung haben, deren Tiefe mindestens annähernd der Schenkeldicke an den Kupplungsschuhen entspricht.

Hierbei können gemäss Anspruch 9 die Kupplungsschuhe an ihrem Schenkel jeweils mehrere mit Abstand übereinanderliegende Warzen oder Noppen aufweisen, die mit Abstand vom Eckübergang zum Steg angeordnet sind und über die Innenseite des Schenkels um ein Mass vorstehen, das der Tiefe der Querschnittseinziehung am Pfosten entspricht.

Die Lehre des Anspruchs 10 läuft darauf hinaus, dass die Querschnittseinziehungen an den Pfosten spitzwinklig gegen die Ebene der Längsseitenwände geneigt verlaufen, während die Seitenwände der Längssicke bzw. -leiste eine hierzu entgegengesetzte Neigungslage haben und dabei jeweils stumpfwinklig zum Boden der Längssicke bzw. -leiste sowie zu den dieser benachbarten Abschnitten der Pfostenwand verlaufen.

Zweckmässig ist aber auch, dass nach Anspruch 11 einerseits der Schenkel der Kupplungsschuhe eine den Seitenwänden der Längssicke bzw. -leiste am Pfosten angepasste Neigungslage hat, während andererseits die Tiefe der Noppen oder Warzen im Schenkel auf die Neigungslage der Querschnittseinziehung am Pfosten abgestimmt ist.

Schliesslich ist es für die hohe Formstabilität und Standfestigkeit des Regals auch noch zweckmässig, dass nach Anspruch 12 die Ausklinkung in den Enden der Horizontalstrebe in ihrer Umrissform an die geneigte Lage der Seitenwände der Längssicke bzw. -leiste am Pfosten angepasst ist und dabei die Enden der Horizontalstrebe in ihrer Wirklage einen gewissen Abstand von den ihnen benachbarten Abschnitten der Pfostenwand einnehmen. Die stabilisierende Stützwirkung wird hier zwischen den geneigten Seitenwänden der Längssicke bzw. -leiste und den geneigten Seitenflanken der Endausklinkung in den Horizontalstreben erreicht.

Es sei noch erwähnt, dass es an sich, bspw. durch die DD-A 99 091, bekannt ist, Regale mit aufrechten Pfosten sowie diese miteinander verbindenden Horizontalstreben durch eingebaute Gelenke zwischen den Pfosten und den Horizontalstreben so zu gestalten, dass sie sich zu Verpackungszwecken sowie für die Lagerung und den Versand raumsparend zusammenklappen lassen, während sie in ihrer Funktionsstellung über diagonal verlaufende Druckstäbe als Versteifungsstreben verriegelbar sind. Im übrigen hat jedoch dieses bekannte Regal keine wesentlichen Berührungspunkte mit dem Regal nach der Erfindung.

Die Zeichnung zeigt den Gegenstand der Erfindung in verschiedenen Ausführungsbeispielen, und zwar

Figur 1 in schematisch vereinfachter Ansicht von vorne den Gesamtaufbau eines Regals,

Figur 2 das Regal nach Fig. 1 in Pfeilrichtung II gesehen,

Figur 3 das Regal nach Fig. 1 in Pfeilrichtung III gesehen,

Figur 4 etwa in natürlicher Grösse einen Horizontalschnitt entlang der Linie IV–IV in Fig. 1,

Figur 5 eine Ansicht in Pfeilrichtung V der Fig. 4,

Figur 6 etwa in natürlicher Grösse den in Fig. 2 mit VI gekennzeichneten, oberen Endabschnitt eines Regals,

Figur 7 in einer von Fig. 2 abgeleiteten Seitenansicht eine vorteilhafte Variationsmöglichkeit für ein erfindungsgemässes Regal,

Figur 8 eine Ansicht in Pfeilrichtung VIII auf die bauliche Variation eines Regals nach Fig. 7,

Figur 9 das Regal nach den Fig. 7 und 8 in seiner Gebrauchsstellung,

Figur 10 in räumlicher Darstellung eine Einzelheit der Regalbauart nach den Fig. 7 bis 9,

Figur 11 einen der Fig. 4 entsprechenden Horizontalschnitt einer weitergebildeten Regalausführung,

Figur 12 in räumlicher Darstellung einen der Fig. 5 entsprechenden Teilbereich eines Regals in abgewandelter Ausführung und

Figur 13 einen Horizontalschnitt durch die linke Hälfte des Regal-Teilbereichs nach Fig. 12.

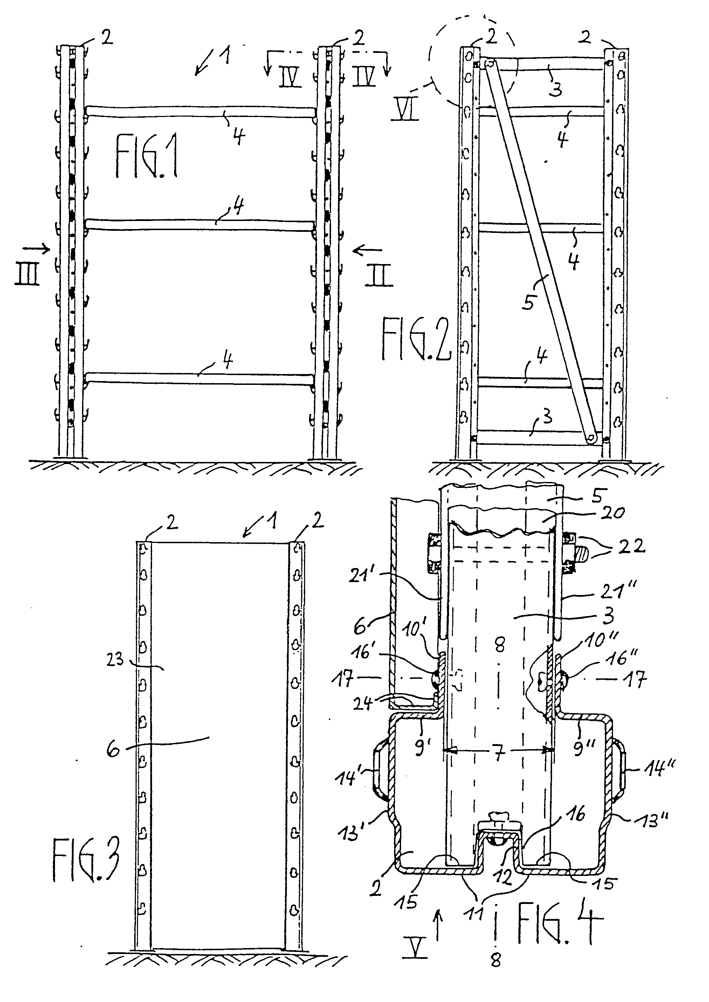

In den Fig. 1 bis 3 ist ein Regal 1 dargestellt, welches aus mindestens vier baugleichen Pfosten 2, wenigstens zwei Horizontalstreben 3 und mehreren Fachböden 4 zusammengesetzt werden kann sowie die Benutzung zusätzlicher Bauelemente, nämlich bspw. Versteifungsstreben 5 und/oder Versteifungswände 6 ermöglicht.

Jeder der vier Pfosten 2 besteht aus einem, bspw. durch Abkanten, hergestellten Blechprofil, das an einer Längsseite eine Spaltöffnung 7 hat und dabei zu einer diese Spaltöffnung 7 kreuzenden Ebene 8–8 im Querschnitt symmetrisch gestaltet ist.

Die Spaltöffnung 7 der Pfosten 2 ist beidseitig durch einen rechtwinklig von den ihr benachbarten Wänden 9' und 9" nach aussen abstehenden Flansch 10' und 10" begrenzt, während in die der Spaltöffnung 7 gegenüberliegende Wand 11, wiederum symmetrisch zu der die Spaltöffnung 7 kreuzenden Ebene 8–8 eine in das Blechprofil hineinragende Längssicke oder -leiste 12 eingeformt ist. An beiden Seitenwänden 13' und 13" sind die Pfosten 2 mit in ihrer Längsrichtung gleimässig verteilt angeordneten Einhängerasten bzw. -zungen 14' und 14" versehen, wie das die Fig. 1 bis 3 deutlich zeigen.

Auch die Horizontalstreben 3 werden von Blechprofilen gebildet, die wenigstens einen U- oder C-förmigen Querschnitt haben und dabei mit ihrer Längsöffnung nach oben oder nach unten gerichtet sind, wie das besonders deutlich aus Fig. 5 zu sehen ist.

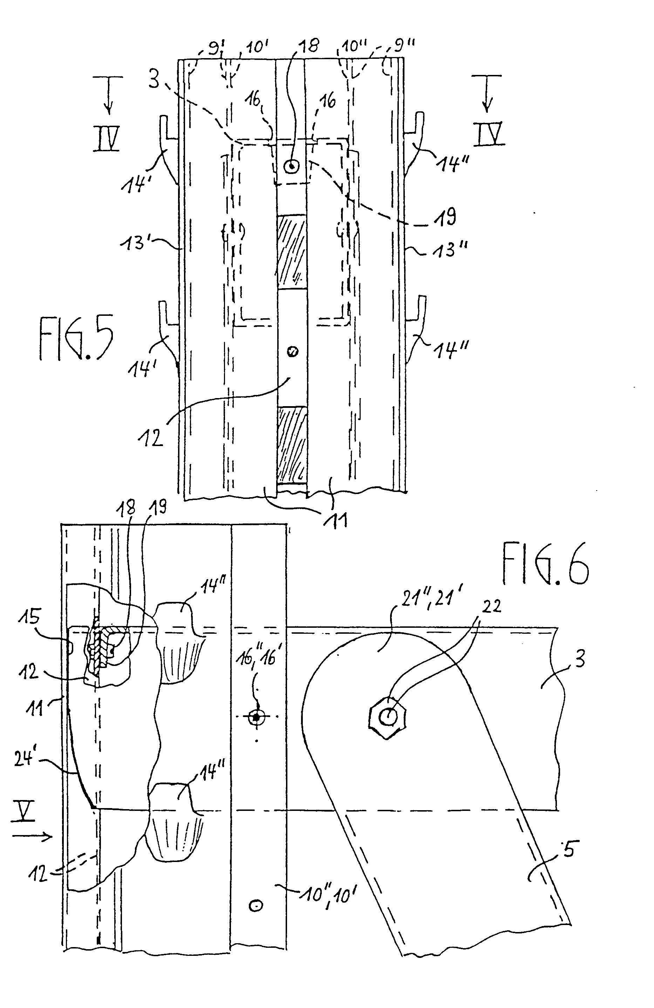

Die Horizontalstreben 3 greifen durch die Spaltöffnung 7 in die die Pfosten 2 bildenden Blechprofile hinein, und zwar soweit, dass ihre Enden 15 bis an die der Spaltöffnung 7 gegenüberliegende Wand 11 heranreichen, wie das insbesondere aus den Fig. 4 und 6 deutlich ersichtlich ist. Die Enden 15 der Horizontalstreben 3 sind dabei mit einer Ausklinkung 16 versehen, derart, dass sie im Bereich dieser Ausklinkung 16 die Längssicke oder -leiste 12 in den Pfosten gabelartig umfassen können, wie das der Fig. 4 zu entnehmen ist. Die Verbindung der Horizontalstreben 3 mit den Pfosten 2 erfolgt jeweils an drei Stellen, nämlich einerseits an beiden Flanschen 10' und 10" über Nieten 16' und 16" oder auch Schrauben, die Fluchtlage zu einer gemeinsamen Achse 17–17 haben. Die dritte Halteverbindung, welche ebenfalls durch ein Niet 18 oder auch durch eine Schraube hergestellt werden kann, wird zwischen der Längssicke oder -leiste 12 und einem Lappen 19 vorgesehen, der im Bereich der Ausklinkung 16 aus der Wand der Horizontalstreben 3 abgewinkelt ist (Fig. 4 bis 6).

Durch die Niet- oder Schraubverbindungen 16', 16" und 18 werden die Horizontalstreben 3 jeweils an drei einen relativ grossen Abstand voneinander aufweisenden Punkten mit den Pfosten 2 verbunden und erhalten ausserdem in diesen stabile seitliche Abstützungen einerseits zwischen den beiden Flanschen 10' und 10" sowie andererseits durch die gabelförmige Eingriffsverbindung ihrer die Ausklinkung 16 aufweisenden Enden 15 mit der Längssicke oder -leiste 12. Eine hohe Formstabilität der jeweils aus zwei Pfosten 2 und mindestens zwei Horizontalstreben 3 gebildeten Rahmensysteme ist hierdurch gewährleistet.

Eine wirksame Versteifung dieser Rahmensysteme lässt sich durch zusätzliche Benutzung diagonal verlaufender Druckstäbe 5 erreichen, die als Versteifungsstreben bspw. nahe dem linken Ende an der oberen Horizontalstrebe 3 und nahe dem rechten Ende an der unteren Horizontalstrebe 3 angreifen, wie das der Fig. 2 entnommen werden kann.

Die Diagonalstreben 5 können praktisch aus dem gleichen Blechprofil gefertigt werden, wie die Horizontalstreben 3. Sie müssen lediglich an jedem Ende so mit einer Ausklinkung 20 versehen werden, dass dort Seitenwangen 21' und 21" stehenbleiben, mit denen sie, gegebenenfalls nach entsprechender Verkröpfung, die Horizontalstreben umgreifen können, wie das die Fig. 4 und 6 erkennen lassen.

Durch eine Schrauben-Steck-Verbindung 22 werden dann die Diagonalstreben 5 an die Horizontalstreben 3 angeschlossen und stabilisieren damit das Rahmensystem aus zwei Pfosten 2 und mindestens zwei Horizontalstreben 3 in seiner rechtwinkligen Wirklage gemäss Fig. 2.

Zusätzlich zu den Diagonalstreben 5 oder anstelle derselben können zur Fixierung jedes aus zwei Pfosten 2 und mindestens zwei Horizontalstreben 3 bestehenden Rahmensystems auch aus Blech geformte Seitenwände 23 in Benutzung genommen werden, die mit ihren Zargenrändern 24 in die Abstufung zwischen den Wänden 9', 9" und den Flanschen 10', 10" der Pfosten 2 eingreifen, wie das aus Fig. 4 ersichtlich ist. Die Lagensicherung der Seitenwände 23 lässt sich dabei bspw. durch Blechschrauben bewirken, welche nahe den Zargenrändern 24 durch die Seitenwände 3 in die Flansche 10', 10" der Pfosten 2 eingreifen.

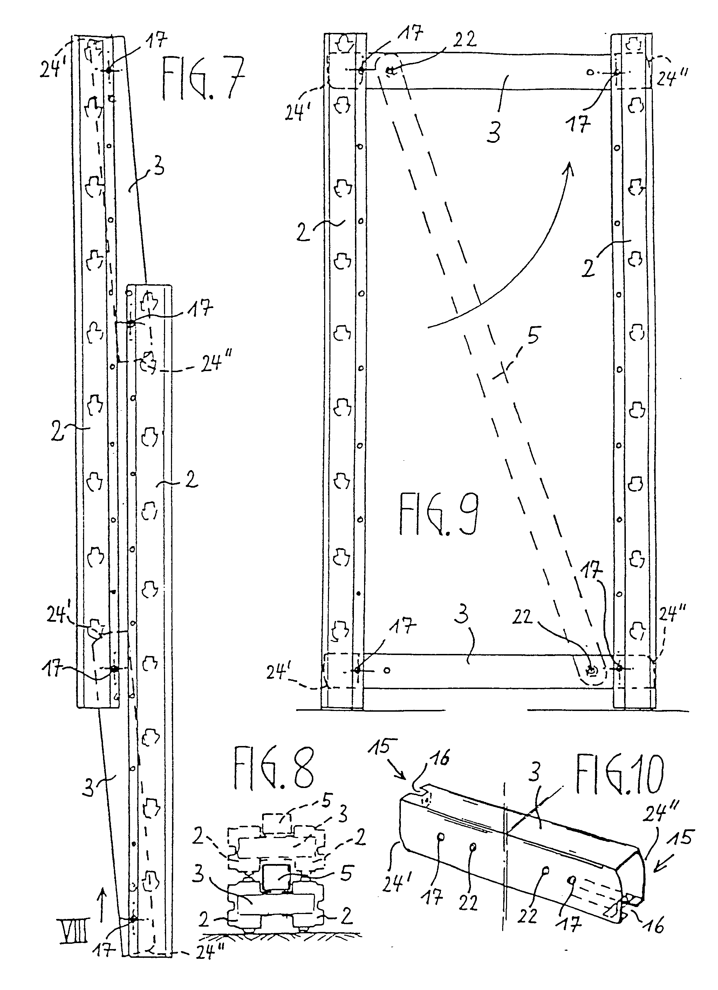

In den Fig. 7 bis 10 der Zeichnung ist eine Bauart eines Regals 1 gezeigt, die sich aufgrund geringfügiger Änderungs- bzw. Ergänzungsmassnahmen so gestalten lässt, dass die jeweils aus zwei Pfosten 2 und zwei Horizontalstreben 3 gebildeten Rahmensysteme bereits werksseits vormontiert werden können, sich aber für die Verpackung sowie die Lagerung und den Versand parallelogrammartig, raumsparend zusammenlegen lassen.

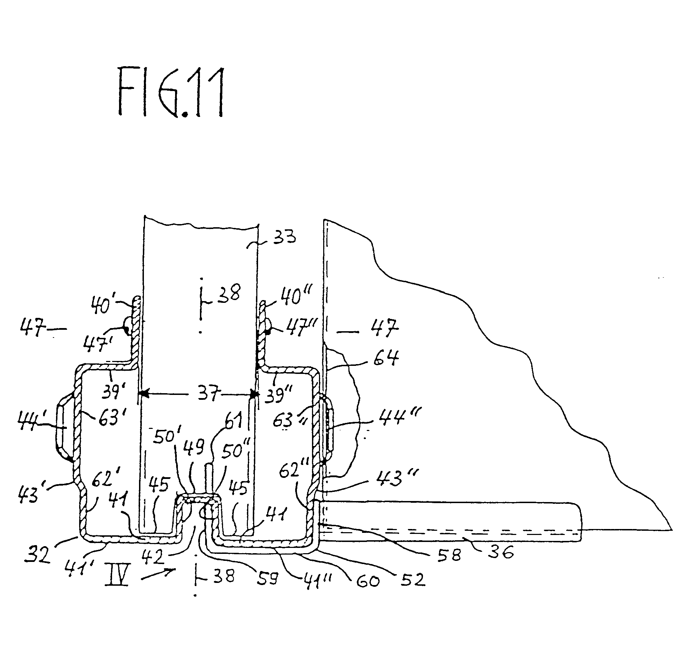

Zu dem genannten Zweck ist es lediglich notwendig, die Horizontalstreben 3 mit den beiden Pfosten 2 über die Nieten oder Schrauben 16', 16" in Fluchtlage der Achse 17−17 gelenkig aber fest miteinander zu verbinden sowie die Enden 15 der beiden Horizontalstreben 3 an sich diagonal gegenüberliegenden Ecken jeweils mit einem Abrundungsradius 24' bzw. 24" um die Gelenkachse 17 zu versehen, der sich jeweils höchstens über die halbe Querschnittshöhe der Horizontalstreben 3 erstreckt, wie das den Fig. 7, 9 und 10 entnommen werden kann. Aufgrund dieser Ausgestaltung lassen sich dann die aus zwei Pfosten 2 und zwei Horizontalstreben 3 gebildeten Rahmensysteme parallelogrammartig zwischen der aus Fig. 7 ersichtlichen zusammengelegten Stellung und der aus Fig. 9 ersichtlichen Wirkstellung verändern, wobei in der Wirkstellung nach Fig. 9 die geraden Abschnitte an den Enden 15 der Horizontalstreben 3 als Stützanschläge gegen die Wand 11 der Pfosten 2 zur Stützanlage kommen, während gleichzeitig ihre Ausklinkung 16 die Längssicke oder -leiste 12 gabelförmig umgreift. Durch Anbringen der Niet- oder Schraubverbindungen 18 zwischen den Lappen 19 der Horizontalstreben 3 und der Längssicke oder -leiste 12 des Pfostens wird dann die Wirklage des Rahmensystems gemäss Fig. 9 fixiert sowie anschliessend durch Einsetzen der Diagonalstrebe 5 und/oder gegebenenfalls auch der Seitenwände 23 zusätzlich gesichert.

In Fig. 8 wird gezeigt, auf welche raumsparende Art und Weise sich zwei Rahmensysteme zur Bildung eines Regals 1 und die zugehörigen Diagonalstreben 5 verpacken, lagern und versenden lassen.

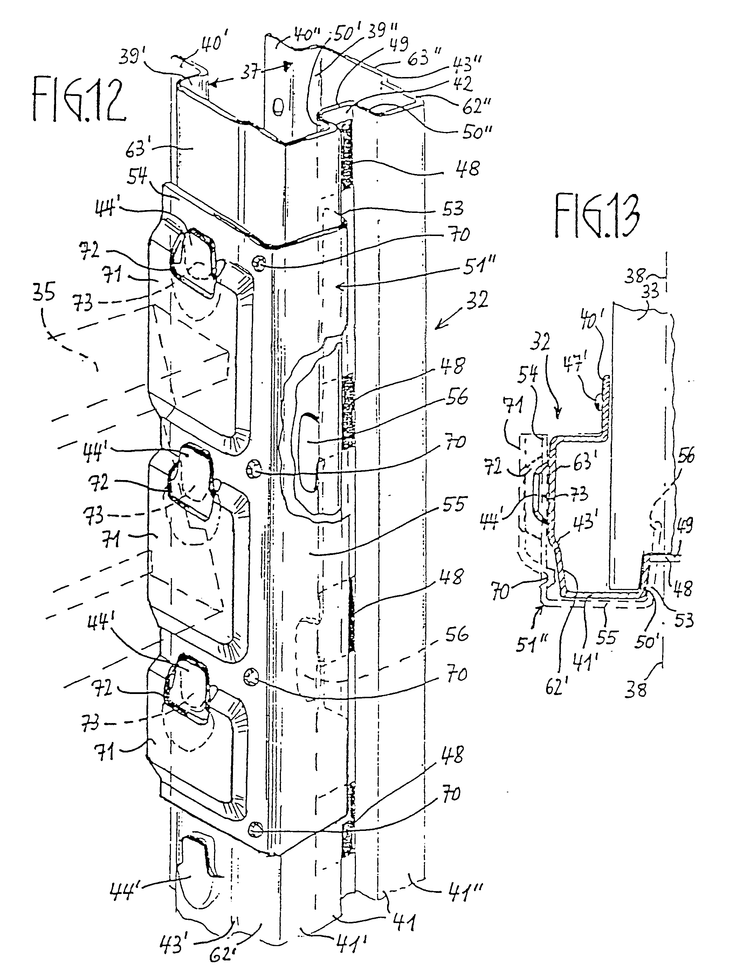

Aus den Fig. 11 bis 13 der Zeichnung sind Weiterbildungsmassnahmen des Regals 1 ersichtlich, durch die dessen Formstabilität und Standfestigkeit weiter verbessert werden kann.

In den Fig. 11 bis 13 sind dabei Bezugszeichen verwendet, die gegenüber den Bezugszeichen in den Fig. 1 bis 10 jeweils um drei Dekaden erhöht sind. So haben dort die Pfosten jeweils das Bezugszeichen 32, während die Horizontalstreben durch das Bezugszeichen 33 gekennzeichnet sind usw.

Jeder aus einem durch Abkantung hergestellten Blechprofil bestehende Pfosten 32 hat auch hier an einer Längsseite eine Spaltöffnung 37 und ist zu einer diese Spaltöffnung 37 kreuzenden Ebene 38−38 im Querschnitt symmetrisch gestaltet.

Die Spaltöffnung 37 der Pfosten 32 ist beidseitig durch den rechtwinklig von den ihr benachbarten Wänden 39' und 39" nach aussen abstehenden Flansch 40' und 40" begrenzt, während in die der Spaltöffnung 37 gegenüberliegende Wand 41 − ebenfalls symmetrisch zu der die Spaltöffnung 37 kreuzenden Ebene 38−38 − die Längssicke oder -leiste 42 eingeformt ist. An beiden Seitenwänden 43' und 43" ist der Pfosten 32 mit in seiner Längsrichtung gleichmässig verteilt angeordneten Einhänge- und/oder Verrastelementen 44' und 44" versehen.

Die Horizontalstreben 33 greifen durch die Spaltöffnung 37 in die die Pfosten 32 bildenden Blechprofile hinein, und zwar soweit, dass ihre Enden 45 bis an die der Spaltöffnung 37 gegenüberliegende Wand 41 heranreichen, wie das die Fig. 11 erkennen lässt. Die Enden 45 der Horizontalstreben 33 sind mit der Ausklinkung 46 versehen, derart, dass sie im Bereich dieser Ausklinkung 46 die Längssicke oder -leiste 42 in den Pfosten 32 gabelartig umfassen können (Fig. 11). Der Verbindung zwischen den Horizontalstreben 33 und den Pfosten 32 dienen Niete 47' und 47", die Fluchtlage zu einer gemeinsamen Achse 47−47 haben. Es können hier aber auch Schrauben benutzt werden, um in der Achse 47−47 eine schwenkbewegliche Verbindung zwischen den Horizontalstreben 33 und den Pfosten 32 zu schaffen. Es ergibt sich eine stabile seitliche Abstützung zwischen den Pfosten 32 und den Horizontalstreben 33, und zwar einerseits über die beiden Flanschen 40' und 40" sowie andererseits durch die gabelförmige Eingriffsverbindung der die Ausklinkung 46 aufweisenden Enden 45 der Horizontalstrebe 33 mit der Längssicke oder -leiste 42. Deshalb ist auch eine hohe Formstabilität der jeweils aus zwei Pfosten 32 und mindestens zwei Horizontalstreben 33 gebildeten Rahmensysteme gewährleistet.

Eine weitere, besonders wirksame Versteifung des Regals 1 wird durch die Verwendung von Horizontaltraversen 35 und 36 erreicht, von denen die Horizontaltraverse 36 in Fig. 11 und die Horizontaltraverse 35 in Fig. 12 erkennbar ist.

Ebenso wie die Pfosten 32 und die Horizontalstreben 33 sind auch die Horizontaltraversen 35 und 36 aus Blechprofilen gefertigt. Während dabei die Horizontaltraverse 35 einen Z-förmigen Querschnitt hat (Fig. 12), weist die Horizontaltraverse 36 ein seitwärts offenes Querschnittsprofil, bspw. einen C-Querschnitt, auf.

Die Pfosten 32 weisen ausser ihren Einhänge- und /oder Verrastelementen 44', 44" auch noch im Bereich ihrer Längssicke oder -leiste 42 Einhänge- und/oder Verrastelemente 48 auf, die aus einfachen Schlitzen oder Ausklinkungen bestehen. Sie befinden sich dabei jeweils im Boden 49 der Längssicke oder -leiste 42, und zwar sind sie mindestens im unmittelbaren Anschluss an deren Seitenwände 50' und 50" angeordnet.

Die Einhänge- und/oder Verrastelemente 48 sind gegenüber den Einhänge- und/oder Verrastelementen 44' und 44" in ihrer Höhenlage versetzt angeordnet, wie das die Fig. 12 andeutungsweise erkennen lässt.

An jedem Ende der Horizontaltraversen 35 ist ein Kupplungsschuh 51″ (Fig. 12 und 13) befestigt, während ein ähnlicher Kupplungsschuh 52 an den Enden der Horizontaltraversen 36 sitzt (Fig. 11).

Die Kupplungsschuhe 51″ bzw. 52 haben einen etwa U- oder L-förmigen Querschnitt und sind als Blechteile hergestellt.

Nach der Fig. 12 und 13 haben die Kupplungsschuhe 51″ zwei Schenkel 53 und 54, die durch einen Steg 55 miteinander in einstückiger Verbindung stehen. Der die geringere Breite aufweisende Schenkel 53 ist dabei mit einstückig angeformten Eingriffselementen 56 in Form von in der Schenkelebene abgewinkelten Haken ausgestattet, die mit den als Verrastelemente 48 dienenden Schlitzen oder Ausklinkungen im Boden 49 der Längssicke 42 in Eingriff gebracht werden können.

Auch der andere, breitere Schenkel 54 der Kupplungsschuhe 51″ trägt jeweils mehrere Eingriffselemente, und zwar ist er mit mehreren, bspw. drei, im Abstand übereinanderliegenden, nach aussen gerichteten Verpressungen 71 ausgestattet, deren jede im Bereich ihres oberen Randes einen Durchbruch 72 hat, während andererseits in der Ebene des Schenkels 54 ein abwärts gerichteter Haken 73 stehen bleibt.

Beim Einhängen der Kupplungsschuhe 51″ an einem Pfosten 32 treten deren Haken 73 von oben her hinter die Einhänge- und/oder Verrastelemente 44′ bzw. 44″ der Pfosten 32 ein, während zugleich die Einhänge- und/oder Verrastelemente 44′ bzw. 44″ von unten her durch die Durchbrüche 72 hochragen. Diese Ausgestaltung der Kupplungsschuhe 51″ ergibt durch die vorgesehenen Verpressungen 71 eine erhöhte Formstabilität und ausserdem eine verbesserte Eingriffsverbindung mit den Pfosten 32.

Da die Verpressungen 71 recht grosszügig bemessen werden können, ergeben sich auch gute Anschweissebenen für die Horizontaltraversen 35.

Das Zusammenwirken der einzelnen Kupplungsschuhe 51″ nach Fig. 12 mit einem Pfosten 32 ist auch aus Fig. 13 ersichtlich. Dabei macht Fig. 13 aber ferner deutlich, dass die Pfosten 32 auch noch eine gegenüber Fig. 11 abgewandelte Profilierung erhalten können.

Der Unterschied gegenüber der Profilform nach Fig. 11 liegt beim Pfosten 32 nach Fig. 7 darin, dass einerseits die abgestuften Querschnittseinziehungen 62′ und 62″ gegenüber der Ebene ihrer Längsseitenwände 43′ bzw. 43″ spitzwinklig geneigt ausgelegt sind. Andererseits haben aber auch die Seitenwände 50′ bzw. 50″ der Längssicke bzw. -leiste 42 eine entsprechende, jedoch entgegengesetzt gerichtete Neigungslage. Sie verlaufen nämlich jeweils spitzwinklig zum Boden 49 der Längssicke bzw. -leiste 42 und zu den dieser benachbarten Abschnitten 41′ bzw. 41″ der Pfostenwand 41.

Durch entsprechende Ausgestaltung der Schenkel 53 und der Warzen bzw. Noppen 70 am Kupplungsschuh 51″ wird eine besonders gute, nämlich keilartig wirksame, Kupplungsverbindung mit den Pfosten gewährleistet.

Da gemäss Fig. 13 nicht nur die Seitenwände 50′ bzw. 50″ der Längssicke bzw. -leiste 42, sondern auch die ihnen zugeordneten Seitenflanken der Ausklinkung 46 in den Enden 45 der Horizontalstreben 33 eine angepasste Neigungslage haben, können diese sich in der Wirklage der Horizontalstreben 36 keilartig verspannend aneinander abstützen und dadurch eine gute gegenseitige Krafteinleitung bewirken, auch wenn die Enden 45 der Horizontalstreben 33 von den Innenflächen der Wandabschnitte 41′, 41″ der Pfosten 32 einen gewissen Abstand behalten, wie das in Fig. 13 erkennbar ist.

Eine den Kupplungsschuhen 51″ ähnliche Ausbildung haben auch die Kupplungsschuhe 52 der Horizontaltraversen 36, d. h., sie weisen einen U- oder L-förmigen Querschnitt mit zwei parallelen Schenkeln 58 und 59 sowie einen diese einstückig miteinander verbindenden Steg 60 auf. Der Schenkel 58 hat wiederum eine geringere Breite als der Schenkel 59, wobei in diesem Falle lediglich der Schenkel 59 Eingriffselemente 61 in Form von Haken trägt, die in der Schenkelebene abgewinkelt gestaltet sind.

Mit dem die Eingriffselemente 61 tragenden Schenkel 59 greift der Kupplungsschuh 52 in die Längssicke bzw. -leiste 42 des Pfostens 32 ein, und zwar derart, dass die als Haken gestalteten Eingriffselemente 61 die von Schlitzen oder Ausklinkungen gebildeten Einhänge- und/oder Verrastelemente 48 im Boden 49 der Längssicke bzw. -leiste 42 durchsetzen und sich darin unter Verhakung verspannen. Dabei liegt der Schenkel 59 aussenseitig dicht an einer der Seitenwände 50′ und 50″ der Längssicke oder -leiste 42 an, während gleichzeitig der Schenkel 58 aussenseitig an einer der Längsseitenwände 43′ bzw. 43″ zur Anlage kommt, und zwar im Bereich einer Querschnittseinziehung 62′ bzw. 62″, die gegenüber dem die Einhänge- und/oder Verrastelemente 44′ bzw. 44″ tragenden Bereich 63′ bzw. 63″ der Längsseitenwände 43′, 43″ um ein Mass zurückversetzt ist, das mindestens der Materialdicke des Schenkels 58 an den Kupplungsschuhen 52 entspricht. Die Breite dieser Querschnittseinziehungen 62′ bzw. 62″ ist dabei auf die Breite des Schenkels 58 abgestimmt (Fig. 11).

## Patentansprüche

1. Regal mit aufrechten Pfosten aus Blechprofilen sowie diese miteinander verbindenden Horizontalstreben, die ebenfalls aus Blechprofilen gebildet sind, wobei die Blechprofile der Pfosten an einer Längsseite eine Spaltöffnung haben und zu einer diese Spaltöffnung kreuzenden Ebene im Querschnitt symmetrisch gestaltet sind, wobei ferner die Spaltöffnung beidseitig durch einen rechtwinklig von den ihr benachbarten Wänden nach aussen abstehenden Flansch begrenzt ist und wobei in die der Spaltöffnung gegenüberliegende Wand symmetrisch zu der die Spaltöffnung kreuzenden Ebene eine in das Blechprofil hineinragende Längssicke oder -leiste eingeformt ist, während die Blechprofile der Horizontalstreben wenigstens einen U- oder C-Querschnitt haben und, mit ihrer Längsöffnung nach oben oder unten gerichtet, über ihre Enden in die Spaltöffnung der Pfosten eingreifen sowie mit den dieser Spaltöffnung benachbarten Flanschen verbunden bzw. verbindbar sind, dadurch gekennzeichnet, dass die Horizontalstreben (3 bzw. 33) mit ihren Enden (15 bzw. 45) bis an die der Spaltöffnung (7 bzw. 37) gegenüberliegende Wand (11 bzw. 41) in den die Pfosten (2 bzw. 32) bildenden Blechprofilen heranreichen und dort mit einer Ausklinkung (16 bzw. 46) versehen sind, in deren Bereich sie die Längssicke oder -leiste (12 bzw. 42) in den Pfosten (2 bzw. 32) gabelartig umfassen (Fig. 4 bzw. 11 und 13).

2. Regal nach Anspruch 1, dadurch gekennzeichnet, dass die Horizontalstreben (3) an jedem Flansch (10', 10") der Pfosten (2) durch je eine Niet- oder Schraubverbindung (16', 16") befestigt bzw. befestigbar sind und eine dritte Verbindungsstelle zwischen jedem Ende (15) der Horizontalstreben (3) und den Pfosten (2) durch einen Niet oder eine Schraube (18) gebildet ist, das bzw. die einerseits an einem abgewinkelten Lappen (19) im Bereich der Ausklinkungen (16) der Horizontalstreben (3) und andererseits in einer Wand der Längssicke oder -leiste der Pfosten (2) angreift.

3. Regal nach einem der Ansprüche 1 und 2, dadurch gekennzeichnet, dass die beiden Niet- oder Schraubverbindungen (16', 16") zwischen den Horizontalstreben (3) und den Flanschen (10', 10") der Pfosten (2) in Achsflucht (17−17) zueinander liegen und ein Verbindungsgelenk bilden, während die dritte Niet- oder Schraubverbindung (18) zwischen dem Lappen (19) der Horizontalstreben (3) und der Längssicke oder -leiste (12) der Pfosten (2) als Sperrverbindung für die Verbindungsgelenke (17) wirksam ist.

4. Regal nach einem der Ansprüche 1 bis 3, dadurch gekennzeichnet, dass mit einer oberen und einer unteren zur Verbindung zweier Pfosten (2) vorgesehenen Horizontalstrebe (3) ein diagonal verlaufender Druckstab (5) als Versteifungsstrebe verbindbar ist (Fig. 2 und 9).

5. Regal nach einem der Ansprüche 1 bis 4, dadurch gekennzeichnet, dass der Druckstab (5) gabelförmige Enden (21', 21") hat, mit denen er die Horizontalstreben (3) umgreift und mit diesen durch eine lösbare Schrauben-Steckverbindung (22) kuppelbar ist (Fig. 6 und 9).

6. Regal nach einem der Ansprüche 1 bis 5, dadurch gekennzeichnet, dass zwischen zwei sich gegenüberliegenden Pfosten (2) in von den Flanschen (10', 10") des Längsspaltes (7) begrenzten Abstufungen (9', 9") Seitenwände (23) als Aussteifungen befestigbar sind (Fig. 3 und 4).

7. Regal nach einem der Ansprüche 1 bis 6, dadurch gekennzeichnet, dass die Längssicke oder -leiste (42) in den Pfosten (32) mit Einhänge- und/oder Verrastelementen (48) für Eingriffselemente (56 bzw. 61) versehen sind, die sich an den freien Schenkeln (53 bzw. 59) von im Querschnitt etwa U- oder L-förmigen Kupplungsschuhen (51', 51" bzw. 52) von Horizontaltraversen (35 bzw. 36) befinden, wobei die Kupplungsschuhe (51', 51" bzw. 52) den zwischen einer Längsseitenwand (43' bzw. 43") und der dieser benachbarten Seitenwand (50' bzw. 50") der Längssicke oder -leiste (42) begrenzenden Querschnittsbereich (43', 41', 50' bzw. 43", 41", 50") eines Pfostens (32) passend umgreifen.

8. Regal nach Anspruch 7, dadurch gekennzeichnet, dass die Längsseitenwände (43', 43") der Pfosten (32) an ihrem der Längssicke oder -leiste (42) benachbarten Bereich eine gegenüber dem die Einhänge- und/oder Verrastelemente (44', 44") aufweisenden Bereich (63', 63") abgestufte Querschnittseinziehung (62', 62") haben, deren Tiefe mindestens annähernd der Schenkeldicke an den Kupplungsschuhen (51', 51" bzw. 52) entspricht.

9. Regal nach einem der Ansprüche 7 und 8, dadurch gekennzeichnet, dass die Kupplungsschuhe (51' und 51") an ihrem Schenkel (54) jeweils mehrere mit Abstand übereinanderliegende Warzen oder Noppen (70) aufweisen, die mit Abstand vom Eckübergang zum Steg angeordnet sind und über die Innenseite des Schenkels (54) um ein Mass vorstehen, das der Tiefe der Querschnittseinziehung (62' bzw. 62") am Pfosten (32) entspricht.

10. Regal nach einem der Ansprüche 7 bis 9, dadurch gekennzeichnet, dass die Querschnittseinziehungen (62' bzw. 62") an den Pfosten (32) spitzwinklig gegen die Ebene der Längsseitenwände (43' bzw. 43") geneigt verlaufen, während die Seitenwände (50' bzw. 50") der Längssicke bzw. -leiste (42) eine hierzu entgegengesetzte Neigungslage haben und dabei jeweils stumpfwinklig zum Boden (49) der Längssicke bzw. -leiste (42) sowie zu den dieser benachbarten Abschnitten (41' bzw. 41") der Pfostenwand (41) verlaufen.

11. Regal nach einem der Ansprüche 7 bis 10, dadurch gekennzeichnet, dass einerseits der Schenkel (53) der Kupplungsschuhe (51', 51") eine den Seitenwänden (50' bzw. 50") der Längssicke bzw. -leiste (42) am Pfosten (32) angepasste Neigungslage hat, während andererseits die Tiefe der Noppen oder Warzen (70) im Schenkel (54) auf die Neigungslage der Querschnittseinziehungen (62' bzw. 62") am Pfosten (32) abgestimmt ist.

12. Regal nach einem der Ansprüche 7 bis 11, dadurch gekennzeichnet, dass die Ausklinkung (46) in der Horizontalstrebe (33) in ihrer Umrissform auf die Neigungslage der Seitenwände (50' bzw. 50") der Längssicke bzw. -leiste (42) abgestimmte Umrissform hat und dabei die stirnseitigen Enden (45) der Horizontalstrebe (33) in deren Eingriffslage einen Abstand zu den Profilabschnitten (41', 41") der Pfosten (32) aufweisen.

**Claims**

1. A rack having upright posts of sheetmetal sections as well as horizontal struts connecting them together, which are likewise formed from sheetmetal sections, the sheetmetal sections of the posts having at one long side a slit aperture and being designed symmetrically in cross-section about a plane crossing this slit aperture, the slit aperture being further bounded on each side by a flange projecting outwards at right angles from the walls adjacent to it and a longitudinal crease or ridge symmetrical about the plane crossing the slit aperture being shaped into the wall lying opposite the slit aperture, whilst the sheetmetal sections of the horizontal struts have at least one U- or C-shaped cross-section and with their longitudinal opening directed upwards or downwards engage via their ends in the slit apertures in the posts and are also connected or connectable to the flanges adjacent to this slit aperture, characterized in that the horizontal strut (3 resp. 33) with its end (15 resp. 45) reaches across into the sheetmetal section forming the post (2 resp. 32), as far as the wall (11 resp. 41) lying opposite the slit aperture (7 resp. 37), and is provided there with a jog (16 resp. 46) in the region of which it embraces like a fork the longitudinal crease or ridge (12 resp. 42) in the post (2 resp. 32) (Figures 4 resp. 11 and 13).

2. A rack as in Claim 1, characterized in that the horizontal struts (3) are fastened or fastenable to each flange (10', 10") of the posts (2) by a rivet- or screw-connection (16', 16") and a third point of connection between each end (15) of a horizontal strut (3) and the post (2) is formed by a rivet or screw (18) which at one side engages with an angled tongue (19) in the region of the jog (16) in the horizontal strut (3) and at the other side in one wall of the longitudinal crease or ridge in the post (2).

3. A rack as in one of the Claims 1 and 2, characterized in that the two rivet- or screw-connections (16', 16") between the horizontal strut (3) and the flanges (10', 10") on the post (2) lie in axial alignment (17–17) with one another and form a connecting hinge, whilst the third rivet- or screw-connection (18) between the tongue (19) on the horizontal strut (3) and the longitudinal crease or ridge (12) in the post (2) is effective as a locking connection for the connecting hinge (17).

4. A rack as in one of the Claims 1 to 3, characterized in that a compression member (5) running diagonally may be connected as a stiffening strut to one upper and one lower horizontal strut (3) provided for the connection of two posts (2) (Figures 2 and 9).

5. A rack as in one of the Claims 1 to 4, characterized in that the compression member (5) has forked ends (21', 21") by which it embraces the horizontal struts (3) and may be coupled to them by a detachable screw plug connection (22) (Figures 6 and 9).

6. A rack as in one of the Claims 1 to 5, characterized in that between two posts (2) lying opposite one another sidewalls (23) may be fastened as stiffeners into steps (9', 9") bounded by the flanges (10', 10") of the longitudinal slit (7) (Figures 3 and 4).

7. A rack as in one of the Claims 1 to 6, characterized in that the longitudinal crease or ridge (42) in the post (32) is provided with suspension and/or snap-in elements (48) for engagement elements (56 resp. 61) which lie on the free arms (53 resp. 59) of coupling shoes (51', 51" resp. 52) approximately U- or L-shaped in cross-section on horizontal crosspiecess (35 resp. 36), where the coupling shoes (51', 51" resp. 52) embrace closely the region (43', 41', 50' resp. 43", 41", 50") of the cross-section of a post (32) bounding the longitudinal crease or ridge (42) between one longitudinal sidewall (43' resp. 43") and the sidewall (50' resp. 50") adjacent to it.

8. A rack as in Claim 7, characterized in that the longitudinal sidewalls (43', 43") of the post (32) in the region of them adjacent to the longitudinal crease or ridge (42) have a contraction (62', 62") in cross-section, which is stepped with respect to the region (63', 63") exhibiting the suspension and/or snap-in elements (44', 44") and the depth of which corresponds at least approximately with the thickness of the arms of the coupling shoes (51', 51" resp. 52).

9. A rack as in one of the Claims 7 and 8, characterized in that each coupling shoe (51' and 51") exhibits on its arm (54) a number of bosses or knobs (70) lying spaced one above the other, which are arranged at a distance from the corner transition to the web and project above the inside of the arm (54) by an amount which corresponds with the depth of the contraction (62' resp. 62") in cross-section of the post (32).

10. A rack as in one of the Claims 7 to 9, characterized in that the contractions (62' resp. 62") in cross-section of the post (32) run inclined at an acute angle to the plane of the longitudinal sidewalls (43' resp. 43"), whilst the sidewalls (50' resp. 50") of the longitudinal crease or ridge (42) have a slope opposite to that and thus run at an obtuse angle to the bottom (49) of the longitudinal crease or ridge (42) as well as to the portions (41' resp. 41") of the wall (41) of the post adjacent to the latter.

11. A rack as in one of the Claims 7 to 10, characterized in that at one side the arm (53) of the coupling shoe (51', 51") has a slope adapted to the sidewalls (50' resp. 50") of the longitudinal crease or ridge (42) in the post (32), whilst at the other side the depth of the knobs or bosses (70) in the arm (54) is matched to the slope of the contractions (62' resp. 62") in cross-section of the post (32).

12. A rack as in one of the Claims 7 to 11, characterized in that the jog (46) in the horizontal strut (33) has in the shape of its outline an outline shape matched to the slope of the sidewalls (50' resp. 50") of the longitudinal crease or ridge (42) and thus the outer end (45) of the horizontal strut (33) in its position of engagement exhibits a clearance from the portions (41', 41") of the profile of the post (32).

**Revendications**

1. Rayonnage comportant des montants verticaux en profilés de feuille métallique ainsi que des entretoises horizontales les reliant l'un avec l'autre qui sont également constituées de profilés en feuille métallique, les profilés en feuille métallique des montants comportant, sur un côté longitudinal, une ouverture en forme de fente et leur section étant symétrique par rapport à un plan croisant cette ouverture en forme de fente, l'ouverture en forme de fente étant encore limitée des deux côtés par une bride repliée vers l'extérieur à angle droit par rapport aux parois adjacentes et une moulure ou nervure longitudinale pénétrant dans le profilé en feuille métallique étant formée dans la paroi opposée à l'ouverture en forme de fente, symétriquement par rapport au plan croisant l'ouverture en forme de fente, tandis que les profilés en feuille métallique des entretoises horizontales présentent au moins une section en U ou en C et s'engagent avec l'ouverture longitudinale tournée vers le haut ou vers le bas, par leurs extrémités, dans l'ouverture en forme de fente des montants et sont reliés ou reliables aux brides adjacentes à cette ouverture en forme de fente, caractérisé en ce que les entretoises horizontales (3 ou 33) s'engagent sur leurs extrémités (15 ou 45) dans les profilés en feuille métallique formant les montants (2 ou 32) jusqu'à la paroi (11 ou 41) opposée à l'ouverture en forme de fente (7 ou 37) et y sont munis d'une entaille (16 ou 46) qui entoure à la manière d'une fourche la moulure ou rainure longitudinale (12 ou 42) du montant (2 ou 32) (Fig. 4 ou 11 et 13).

2. Rayonnage selon la revendication 1 caractérisé en ce que les entretoises horizontales (3) sont fixées ou fixables à chaque bride (10', 10") des montants (2) par chaque fois une liaison par rivet ou vis (16', 16") et en ce qu'un troisième point de liaison est formé entre chaque extrémité (15) des entretoises horizontales (3) et les montants (2) par un rivet ou une vis (18) entre, d'une part, une patte repliée (19) dans la zone des entailles (16) pratiquées dans les entretoises horizontales (3) et, d'autre part, une paroi de la moulure ou nervure longitudinale des montants (2).

3. Rayonnage selon l'une des revendications 1 et 2 caractérisé en ce que les deux liaisons par rivet ou par vis (16', 16") entre les entretoises horizontales (3) et les brides (10', 10") des montants (2) sont alignées sur un même axe (17–17) et constituent une articulation de liaison, tandis que la troisième liaison par rivet ou par vis (18) entre la patte (19) des entretoises horizontales (3) et la moulure ou nervure longitudinale (12) des montants agit comme liaison de blocage pour les articulations de liaison (17).

4. Rayonnage selon l'une des revendications 1 à 3 caractérisé en ce qu'une barre de compression s'étendant diagonalement, à titre de renfort, est reliable entre deux entretoises horizontales (3) inférieure et supérieure destinées à relier deux montants (2) (Fig. 2 et 9).

5. Rayonnage selon l'une des revendications 1 à 4 caractérisé en ce que la barre de compression (5) présente des extrémités en forme de fourche (21', 21") qui entourent les entretoises horizontales (3) et en ce qu'elle est reliable à celles-ci par des assemblages démontables par emboîtement et vissage. (Fig. 6 et 9.)

6. Rayonnage selon l'une des revendications 1 à 5 caractérisé en ce que des parois latérales (23) à titre de raidisseurs sont montables entre deux montants (2) opposés, dans des épaulements (9', 9") limités par les brides (10', 10") de la fente longitudinale (7).

7. Rayonnage selon l'une des revendications 1 à 6 caractérisé en ce que les moulures ou nervures longitudinales (42) des montants (32) sont munies d'éléments d'accrochage et/ou d'ancrage (48) pour des éléments d'emboîtement (56 ou 61), qui se trouvent sur les montants libres (53 ou 59) de sabots d'assemblage (51', 51" ou 52) ayant une section approximativement en U ou en L et faisant partie de traverses horizontales (35 ou 36), les sabots d'assemblage (51', 51" ou 52) enveloppant de manière adaptée la zone de section (43', 41', 50' ou 43", 41", 50") d'un montant (32) limitée par une paroi latérale longitudinale (43' ou 43") et par la paroi latérale (50' ou 50") de la rainure ou nervure longitudinale (42) adjacente à cette paroi.

8. Rayonnage selon la revendication 7 caractérisé en ce que les parois latérales longitudinales (43', 43") des montants (32) présentent, dans leur zone adjacente à la moulure ou nervure longitudinale (42), un rétrécissement de section (62', 62") avec épaulement par rapport à la zone comportant les éléments d'accrochage et/ou d'ancrage (44', 44"), rétrécissement dont la profondeur correspond au moins approximativement à l'épaisseur des montants des sabots d'assemblage (51', 51" ou 52).

9. Rayonnage selon l'une des revendications 7 et 8 caractérisé en ce que les sabots d'assemblage (51' et 51") présentent sur leur montant (54) chaque fois plusieurs tétons ou boutons (70) qui sont disposés à distance l'un au-dessus de l'autre et qui sont agencés à distance du passage de l'angle à la semelle et font saillie sur le côté intérieur du montant (54) d'une mesure qui correspond à la profondeur du rétrécissement de section (62' ou 62") du montant (32).

10. Rayonnage selon l'une des revendications 7 à 9 caractérisé en ce que les rétrécissements de section (62' ou 62") des montants (32) s'étendent de manière inclinée en formant un angle aigu avec le plan des parois latérales longitudinales (43' ou 43"), tandis que les parois latérales (50' ou 50") de la moulure ou nervure longitudinale (42) présentent une position inclinée de manière opposée à la précédente et s'étendent en formant chaque fois un angle obtu avec le fond (49) de la moulure ou nervure longitudinale (42) ainsi qu'avec les parties (41' ou 41") de la paroi (41) du montant adjacentes à celles-ci.

11. Rayonnage selon l'une des revendications 7 à 10 caractérisé en ce que, d'une part, le montant (53) des sabots d'assemblage (51', 51") présente une inclinaison adaptée aux parois latérales (50' ou 50") de la moulure ou nervure longitudinale (42) du montant (32), tandis que, d'autre part, la profondeur des tétons ou boutons (70) pratiqués dans le montant (54) est adaptée à l'inclinaison des rétrécissements de section (62' ou 62") du montant (32).

12. Rayonnage selon l'une des revendications 7 à 11 caractérisé en ce que l'entaille (46) pratiquée dans la traverse horizontale (33) présente un contour adapté à l'inclinaison des parois latérales (50' ou 50") de la moulure ou nervure longitudinale (42) et en ce que les extrémités frontales (45) de la traverse horizontale (33) présentent un écartement par rapport aux parties de profilés (41', 41") des montants (32), en position d'emboîtement.

FIG.1

FIG.2

FIG.3

FIG.4

FIG.5

FIG.6

13

FIG.7

FIG.9

FIG.8

FIG.10

# FIG.11

EP 0176002 B1

FIG.12

FIG.13

19